# EUROPEAN PATENT APPLICATION

(11) **EP 4 851 250 A1**
(43) Date of publication of application: **09.12.2026**
(21) Application number: 25748704.1
(22) Date of filing: 30.01.2025
(51) Int. Cl.: C08L 101/00, B60C 1/00, C08K 3/04, C08K 3/013, C08K 5/34

(54) **RUBBER COMPOSITION AND HEAT GENERATION REDUCTION AGENT FOR RUBBER**

(30) Priority: 31.01.2024 JP 2024012415
(71) Applicant: Otsuka Chemical Co., Ltd., Osaka-shi, Osaka 540-0021 (JP); BRIDGESTONE CORPORATION, Chuo-ku Tokyo 104-8340 (JP)
(72) Inventor: SHINOZAKI, Shinya, Osaka-shi, Osaka 540-0021 (JP); UENO, Mifuyu, Osaka-shi, Osaka 540-0021 (JP); FUKUSHIMA, Rika, Tokyo 104-8340 (JP); HAMATANI, Satoshi, Tokyo 104-8340 (JP)
(74) Representative: TBK
(86) International application number: PCT/JP2025/002908
(87) International publication number: WO 2025/164701

(57) **Abstract**

The present invention aims to provide a rubber composition having excellent low heat build-up (high fuel efficiency) in vulcanized rubber. The rubber composition contains a rubber component and a compound represented by Formula (1) and/or a salt thereof.

## Description

### Technical Field

The present invention relates to a rubber composition and a heat-buildup-reducing agent for rubber.

### Background Art

PTL 1 discloses a rubber composition based on a diene elastomer, a reinforcing filler, a chemical crosslinking agent, and a modifier.

PTL 2 discloses a heavy-duty vehicle tire comprising a tread composed of a crosslinked rubber composition that contains an elastomer matrix, a reinforcing filler, a reinforcing inorganic filler/functionalized diene elastomer binder, a chemical crosslinking agent, and a modifier.

PTL 3 discloses a process for the preparation of a diene elastomer modified with a 1,3-dipolar compound.

PTL 4 discloses a nitrile oxide compound comprising a nitrile oxide group and an ionic functional group.

PTL 5 discloses a rubber composition based on a diene elastomer, a 1,3-dipolar compound, and a reinforcing filler.

### Citation List

### Patent Literature

PTL 1: JP2013-531726A
PTL 2: JP2016-506429A
PTL 3: US2019/0315888A1
PTL 4: WO2022/244317A1
PTL 5: US2018/0346691A1

### Summary of Invention

### Technical Problem

The present invention aims to provide a rubber composition exhibiting excellent low heat build-up (high fuel efficiency) in vulcanized rubber.

### Solution to Problem

The present inventors conducted extensive studies to solve the above problem.

The present inventors found that a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, can impart excellent low heat build-up to vulcanized rubber.

As a result of further study based on the above findings, the present inventors completed the present invention. The present invention encompasses the following rubber composition, tire, and heat-buildup-reducing agent for rubber.

### Item 1.

A rubber composition comprising
a rubber component, and
a compound represented by Formula (1) and/or a salt thereof:

   X-A-Y (1)

   wherein
   X represents a functional group having a nitrile oxide group,
   A represents a spacer segment, and
   Y represents triazyl, pyridyl, pyridazyl, pyrazyl, or pyrimidyl, all of which optionally have a substituent at a substitutable position.

### Item 2.

The rubber composition according to Item 1, wherein
in Formula (1), Y represents at least one functional group selected from the group consisting of the following Formulas (4a), (4b), (4c), and (4d): 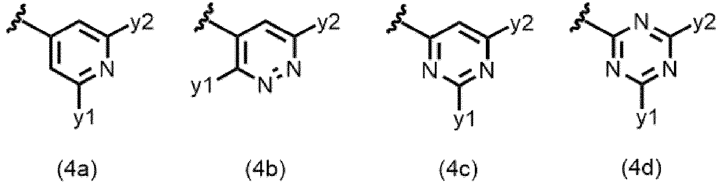 , and
in Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

### Item 3.

The rubber composition according to Item 1, wherein
in Formula (1), X represents at least one functional group having a nitrile oxide group selected from the group consisting of the following Formulas (2a) and (2b): 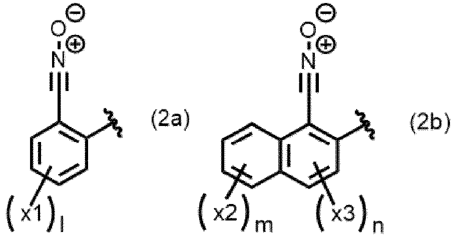
in Formula (2a), x1 represents a hydrogen atom, an alkyl group, an alkoxy group, an aryl group, or a halogen atom, and l represents an integer of 1 to 4,
in Formula (2a), when l is 2 or more, x1 may be the same or different,
in Formula (2b), x2 represents a hydrogen atom, an alkyl group, an alkoxy group, an aryl group, or a halogen atom, and m represents an integer of 1 to 4,
in Formula (2b), when m is 2 or more, x2 may be the same or different,
in Formula (2b), x3 represents a hydrogen atom, an alkyl group, an alkoxy group, an aryl group, or a halogen atom, and n represents an integer of 1 to 2,
in Formula (2b), when n is 2, x3 may be the same or different,

A represents a spacer segment represented by the following Formula (3): 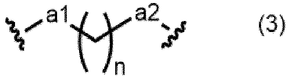
in Formula (3), a1 and a2 are the same or different and each represent at least one element selected from the group consisting of CH₂, NH, oxygen (O), and sulfur (S), and
in Formula (3), n represents an integer of 0 to 10.

### Item 4.

The rubber composition according to Item 1, wherein
the compound represented by Formula (1) and/or a salt thereof is at least one compound selected from the group consisting of the following compounds: 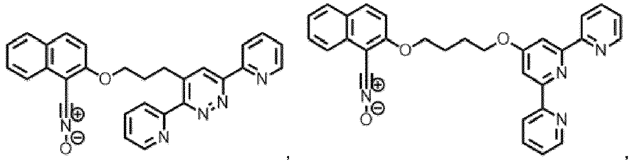 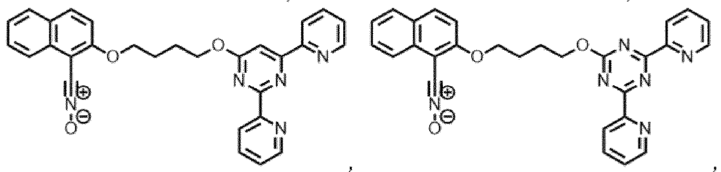 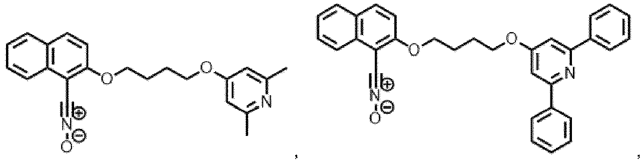 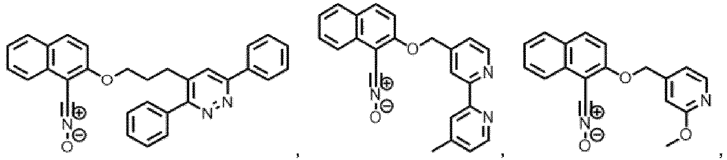 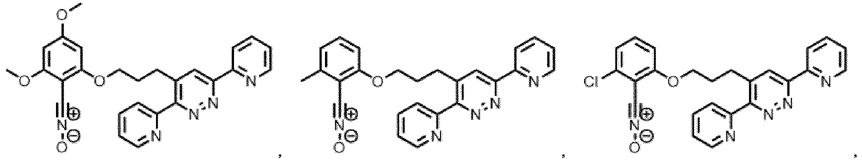 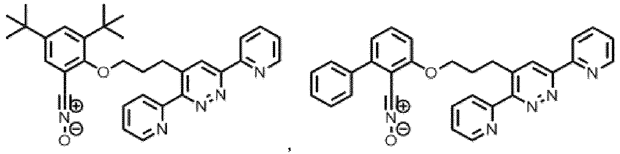
and/or at least one salt thereof.

### Item 5.

The rubber composition according to Item 1, wherein the rubber component is a polymer containing a conjugated diene unit and/or an olefin unit.

### Item 6.

The rubber composition according to Item 1, wherein the rubber component is at least one rubber component selected from the group consisting of natural rubber, isoprene rubber, styrene-butadiene copolymer rubber, butadiene rubber, and ethylene-propylene-diene rubber (EPDM).

### Item 7.

The rubber composition according to Item 1, further comprising carbon black and/or an inorganic filler.

### Item 8.

The rubber composition according to Item 1, comprising 30 to 150 parts by mass of the carbon black and/or the inorganic filler, per 100 parts by mass of the rubber component.

### Item 9.

The rubber composition according to Item 1, comprising 0.01 to 30 parts by mass of the compound represented by Formula (1) and/or a salt thereof, per 100 parts by mass of the rubber component.

### Item 10.

A tire produced using the rubber composition of any one of Items 1 to 9.

### Item 11.

A heat-buildup-reducing agent for rubber, comprising a compound represented by the following Formula (1) and/or a salt thereof:

X-A-Y (1)

wherein
X represents a functional group having a nitrile oxide group,
A represents a spacer segment, and
Y represents triazyl, pyridyl, pyridazyl, pyrazyl, or pyrimidyl, all of which optionally have a substituent at a substitutable position.

### Item 12.

The heat-buildup-reducing agent for rubber according to Item 11, wherein
in Formula (1), Y represents at least one functional group selected from the group consisting of the following Formulas (4a), (4b), (4c), and (4d): 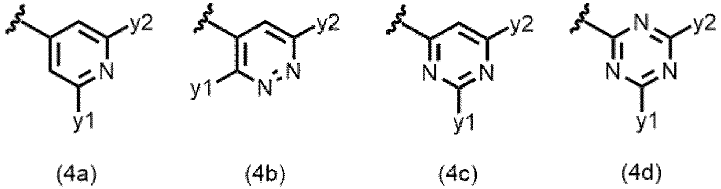 and
in Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

### Item 13.

The heat-buildup-reducing agent for rubber according to Item 11, wherein
in Formula (1), X represents at least one functional group having a nitrile oxide group selected from the group consisting of the following Formulas (2a) and (2b): 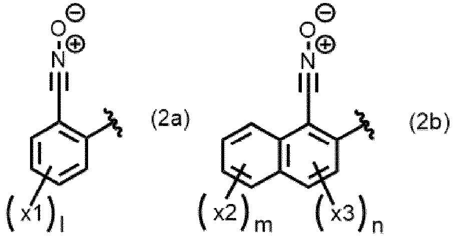
in Formula (2a), x1 represents a hydrogen atom, an alkyl group, an alkoxy group, an aryl group, or a halogen atom, and l represents an integer of 1 to 4,
in Formula (2a), when l is 2 or more, x1 may be the same or different,
in Formula (2b), x2 represents a hydrogen atom, an alkyl group, an alkoxy group, an aryl group, or a halogen atom, and m represents an integer of 1 to 4,
in Formula (2b), when m is 2 or more, x2 may be the same or different,
in Formula (2b), x3 represents a hydrogen atom, an alkyl group, an alkoxy group, an aryl group, or a halogen atom, and n represents an integer of 1 to 2,
in Formula (2b), when n is 2, x3 may be the same or different,

A represents a spacer segment represented by the following Formula (3): 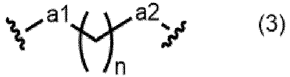
in Formula (3), a1 and a2 are the same or different and each represent at least one element selected from the group consisting of CH₂, NH, oxygen (O), and sulfur (S), and
in Formula (3), n represents an integer of 0 to 10.

### Item 14.

The heat-buildup-reducing agent for rubber according to Item 11, wherein
the compound represented by Formula (1) and/or a salt thereof is at least one compound selected from the group consisting of the following compounds: 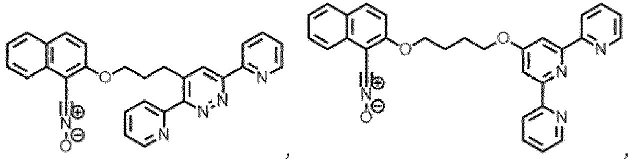 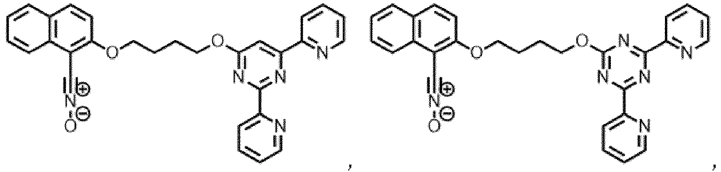 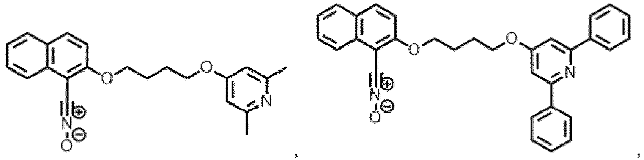 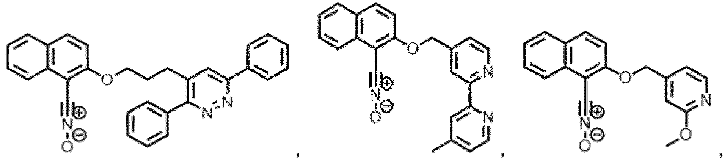 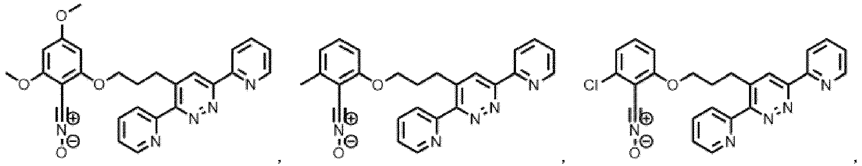 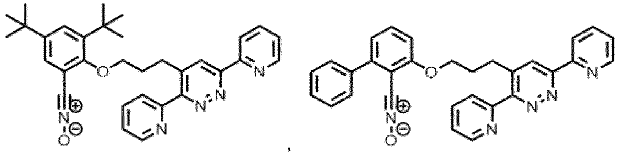
and/or at least one salt thereof.

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

### Advantageous Effects of Invention

The present invention provides a rubber composition having excellent low heat build-up (high fuel efficiency) in vulcanized rubber.

### Description of Embodiments

The present invention is described in detail below.

The embodiments of the present invention are described for the purpose of facilitating understanding of the concept of the invention, and are not intended to limit the invention unless otherwise specified.

In the present specification, the terms "include," "contain," and variations thereof express concepts that encompass all of "comprise," "consist essentially of," and "consist of."

In the present specification, when a numerical range is expressed as "A to B," the expression means A or more and B or less.

In the present specification, when expressions such as "parts" and "%" are used, these generally represent parts by mass, parts by weight, mass% (wt%), or weight% (wt%).

### [1] Rubber Composition

The rubber composition of the present invention contains a rubber component and a compound represented by Formula (1) and/or a salt thereof.

X-A-Y (1)

In Formula (1), X represents a functional group having a nitrile oxide group.

In Formula (1), A represents a spacer segment.

In Formula (1), Y represents triazyl, pyridyl, pyridazyl, pyrazyl, or pyrimidyl, all of which optionally have a substituent at a substitutable position.

In Formula (1), Y preferably represents at least one functional group selected from the group consisting of the following Formulas: (4a), (4b), (4c), and (4d).

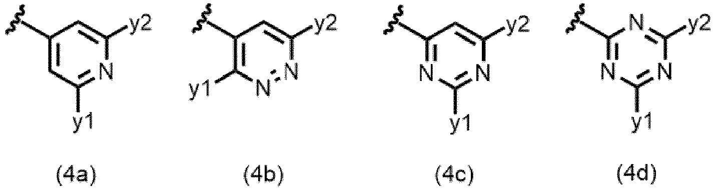

In Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

In Formula (1), X preferably represents at least one functional group having a nitrile oxide group selected from the group consisting of the following Formulas (2a) and (2b).

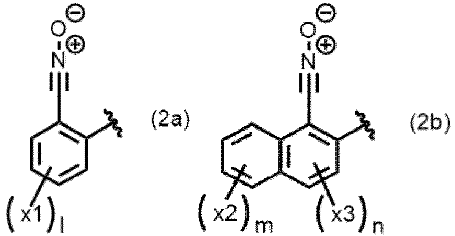

In Formula (2a), x1 represents a hydrogen atom, an alkyl group, an alkoxy group, an aryl group, or a halogen atom, and l represents an integer of 1 to 4. In Formula (2a), when l is 2 or more, x1 may be the same or different.

In Formula (2b), x2 represents a hydrogen atom, an alkyl group, an alkoxy group, an aryl group, or a halogen atom, and m represents an integer of 1 to 4. In Formula (2b), when m is 2 or more, x2 may be the same or different.

In Formula (2b), x3 represents a hydrogen atom, an alkyl group, an alkoxy group, an aryl group, or a halogen atom, and n represents an integer of 1 to 2. In Formula (2b), when n is 2, x3 may be the same or different.

In Formula (1), A preferably represents a spacer segment represented by the following Formula (3).

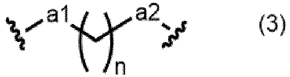

In Formula (3), a1 and a2 are preferably the same or different and each represent at least one element selected from the group consisting of CH₂, NH, oxygen (O), and sulfur (S).

In Formula (3), n preferably represents an integer of 0 to 10.

The compound represented by Formula (1) and/or a salt thereof is preferably at least one compound selected from the group consisting of the following compounds: 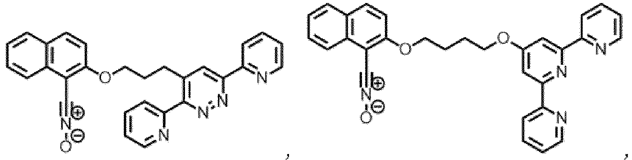 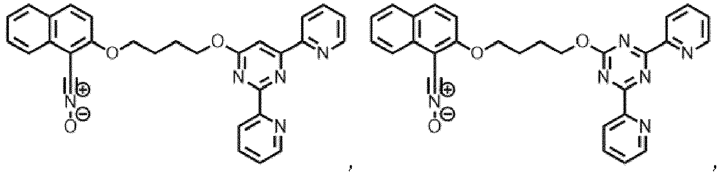 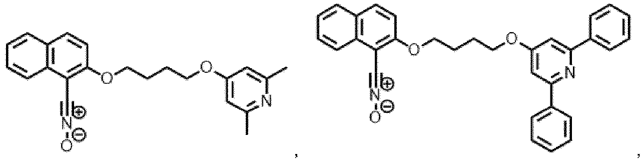 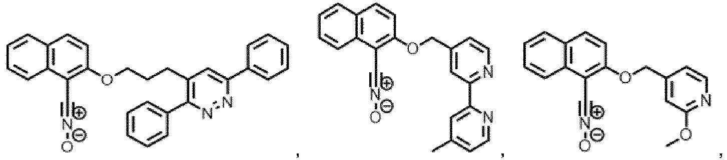 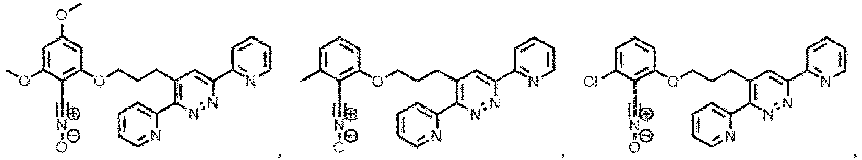 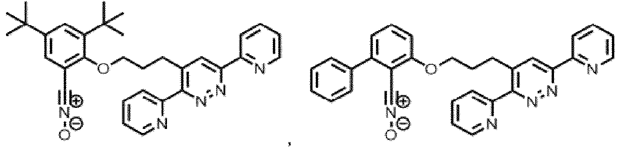 and/or at least one salt thereof.

The rubber component is preferably a polymer containing a conjugated diene unit and/or an olefin unit, and more preferably at least one rubber component selected from the group consisting of natural rubber, isoprene rubber, styrene-butadiene copolymer rubber, butadiene rubber, and ethylene-propylene-diene rubber.

The rubber composition of the present invention preferably further contains carbon black and/or an inorganic filler.

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using the rubber composition exhibits improved fuel efficiency.

### [1-1] Rubber Component

The rubber composition of the present invention contains a rubber component.

The rubber component is not particularly limited. Preferred rubber components include a polymer containing a conjugated diene unit and/or an olefin unit. More preferred rubber components include natural rubber (NR), synthetic diene rubber, mixtures of natural rubber and synthetic diene rubber, and non-diene rubber other than the foregoing.

Preferred natural rubber (NR) include natural rubber latex, technically specified rubber (TSR), ribbed smoked sheet (RSS), gutta-percha, *Eucommia ulmoides*-derived natural rubber, guayule-derived natural rubber, and Russian dandelion-derived natural rubber.

The natural rubber (NR) includes modified natural rubber obtained by modifying the above natural rubber and improved natural rubber. Examples of modified natural rubber include modified natural rubber, such as epoxidized natural rubber, methacrylic acid-modified natural rubber, and styrenemodified natural rubber. Examples of improved natural rubber include highly purified natural rubber.

Preferred synthetic diene rubber include styrene-butadiene copolymer rubber (SBR), butadiene rubber (BR), isoprene rubber (IR), nitrile rubber (NBR), chloroprene rubber (CR), ethylene-propylene-diene terpolymer rubber (EPDM), styreneisoprene-styrene triblock copolymers (SIS), and styrene-butadiene-styrene triblock copolymers (SBS).

The synthetic diene rubber includes modified synthetic diene rubber obtained by modifying the above-mentioned synthetic diene rubber. Preferred synthetic diene rubber includes those obtained by a modification method, such as modifying the main chain, one end, or both ends of the rubber. Preferred modified functional groups of the modified synthetic diene rubber include various functional groups, such as epoxy, amino, alkoxysilyl, and hydroxyl groups. The modified synthetic diene rubber may contain one or more of these functional groups.

The synthetic diene rubber can be produced by any method, such as emulsion polymerization, solution polymerization, radical polymerization, anionic polymerization, or cationic polymerization. The glass transition temperature of the synthetic diene rubber is not particularly limited.

The cis/trans/vinyl ratio of the double bond of natural rubber and synthetic diene rubber is not particularly limited, and any ratio is suitable.

The number average molecular weight and the molecular weight distribution of the diene rubber are not particularly limited. The number average molecular weight is preferably about 500 to 3,000,000, and the molecular weight distribution is preferably about 1.5 to 15.

As the rubber component, any of the above rubber components can be used singly, or as a mixture (blend) of two or more.

The rubber component contained in the rubber composition is preferably at least one rubber component selected from the group consisting of the rubber components described above, more preferably at least one rubber component selected from the group consisting of NR, IR, SBR, EPDM, and BR, and even more preferably at least one rubber component selected from the group consisting of NR and IR.

In the rubber composition, the blend ratio of the rubber component is not particularly limited. The blend ratio of the rubber component may be the following: at least one rubber component selected from the group consisting of NR and IR (a mixture of two or more types) is blended in an amount of preferably 50 parts by mass to 100 parts by mass, more preferably 75 parts by mass to 100 parts by mass, per 100 parts by mass of the entire rubber component.

### [1-2] Compound Represented by Formula (1) and/or Salt Thereof

The rubber composition of the present invention contains a compound represented by Formula (1) and/or a salt thereof:

X-A-Y (1)

### X in Formula (1)

In Formula (1), X represents a functional group having a nitrile oxide group (R-CNO).

In Formula (1), X preferably represents at least one functional group having a nitrile oxide group selected from the group consisting of the following Formulas (2a) and (2b).

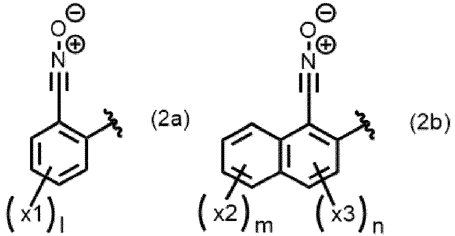

In Formula (2a), x1 represents a hydrogen atom, an alkyl group, an alkoxy group, an aryl group, or a halogen atom, and l represents an integer of 1 to 4. In Formula (2a), when l is 2 or more, x1 may be the same or different. l is preferably an integer of 1 to 3, and more preferably an integer of 1 to 2.

In Formula (2b), x2 represents a hydrogen atom, an alkyl group, an alkoxy group, an aryl group, or a halogen atom, and m represents an integer of 1 to 4. In Formula (2b), when m is 2 or more, x2 may be the same or different. m is preferably an integer of 1 to 3, and more preferably an integer of 1 to 2.

In Formula (2b), x3 represents a hydrogen atom, an alkyl group, an alkoxy group, an aryl group, or a halogen atom, and n represents an integer of 1 to 2. In Formula (2b), when n is 2, x3 may be the same or different.

The alkyl group is not particularly limited. Examples of alkyl groups include linear, branched, or cyclic alkyl groups. Specifically, the alkyl group may be a linear or branched alkyl group having 1 to 4 carbon atoms, such as methyl, ethyl, n-propyl, isopropyl, n-butyl, isobutyl, s-butyl, t-butyl, and 1-ethylpropyl.

Specifically, the alkyl group may be a linear or branched alkyl group having 5 to 18 carbon atoms, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl.

Specifically, the alkyl group may further be a cyclic alkyl group having 3 to 8 carbon atoms, such as cyclopropyl, cyclobutyl, cyclopentyl, cyclohexyl, cycloheptyl, and cyclooctyl.

The alkoxy group is not particularly limited. Examples of alkoxy groups include linear, branched, or cyclic alkoxy groups. Specifically, the alkoxy group may be a linear or branched alkoxy group, such as methoxy, ethoxy, n-propoxy, isopropoxy, n-butoxy, t-butoxy, n-pentyloxy, neopentyloxy, and n-hexyloxy.

Specifically, the alkoxy group may be a cyclic alkoxy group, such as cyclopropyloxy, cyclobutyloxy, cyclopentyloxy, cyclohexyloxy, cycloheptyloxy, and cyclooctyloxy.

The aryl group is not particularly limited. Specifically, the aryl group may be phenyl, biphenyl, naphthyl, dihydroindenyl, 9H-fluorenyl, or the like.

The halogen atom may specifically be a fluorine atom, a chlorine atom, a bromine atom, an iodine atom, or the like, and is preferably a chlorine atom, a bromine atom, an iodine atom, or the like.

### A in Formula (1)

In Formula (1), A represents a spacer segment.

In Formula (1), A preferably represents a spacer segment represented by the following Formula (3).

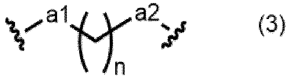

In Formula (3), a1 and a2 are preferably the same or different and each represent at least one element selected from the group consisting of CH₂, NH, oxygen (O), and sulfur (S).

In Formula (3), n preferably represents an integer of 0 to 10, more preferably represents an integer of 0 to 7.

The spacer segment is an alkylene group, such as an ethylene group, a trimethylene group, a tetramethylene group, a pentamethylene group, a hexamethylene group, or a heptamethylene group, which contains a nitrogen atom (N), an oxygen atom (O), and/or a sulfur atom (S). Specifically, the spacer segment is -O-CH₂CH₂-, -O-CH₂CH₂CH₂- (propylether group), -O-CH₂CH₂CH₂CH₂-, -O-CH₂CH₂CH₂CH₂CH₂-, -O-CH₂CH₂-O-, -O-CH₂CH₂CH₂-O-, -O-CH₂CH₂CH₂CH₂-O-(butyl diether group), -O-CH₂CH₂CH₂CH₂CH₂-O-, or the like

### Y in Formula (1)

In Formula (1), Y represents triazyl, pyridyl, pyridazyl, pyrazyl, or pyrimidyl, all of which optionally have a substituent at a substitutable position.

In Formula (1), Y preferably represents at least one functional group selected from the group consisting of the following Formulas (4a), (4b), (4c), and (4d):

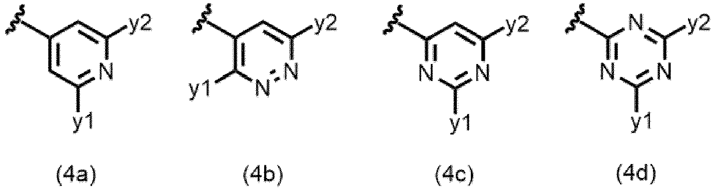

In Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

The heterocyclic group is not particularly limited. Specifically, the heterocyclic group may be 2-pyridyl, 3-pyridyl, 4-pyridyl, 2-pyrazinyl, 2-pyrimidyl, 4-pyrimidyl, 5-pyrimidyl, 3-pyridazyl, 4-pyridazyl, 4-(1,2,3-triazyl), 5-(1,2,3-triazyl), 2-(1,3,5-triazyl), 3-(1,2,4-triazyl), 5-(1,2,4-triazyl), or 6-(1,2,4-triazyl).

Specifically, the heterocyclic group may be 2-quinolyl, 3-quinolyl, 4-quinolyl, 5-quinolyl, 6-quinolyl, 7-quinolyl, 8-quinolyl, 1-isoquinolyl, 3-isoquinolyl, 4-isoquinolyl, 5-isoquinolyl, 6-isoquinolyl, 7-isoquinolyl, 8-isoquinolyl, 2-quinoxalyl, 3-quinoxalyl, 5-quinoxalyl, 6-quinoxalyl, 7-quinoxalyl, 8-quinoxalyl, 3-cinnolinyl, 4-cinnolinyl, 5-cinnolinyl, 6-cinnolinyl, 7-cinnolinyl, or 8-cinnolinyl.

Specifically, the heterocyclic group may be 2-quinazolinyl, 4-quinazolinyl, 5-quinazolinyl, 6-quinazolinyl, 7-quinazolinyl, 8-quinazolinyl, 1-phthalazinyl, 4-phthalazinyl, 5-phthalazinyl, 6-phthalazinyl, 7-phthalazinyl, 8-phthalazinyl, 1-tetrahydroquinolinyl, 2-tetrahydroquinolinyl, 3-tetrahydroquinolinyl, 4-tetrahydroquinolinyl, 5-tetrahydroquinolinyl, 6-tetrahydroquinolinyl, 7-tetrahydroquinolinyl, or 8-tetrahydroquinolinyl.

Specifically, the heterocyclic group may be 1-pyrrolyl, 2-pyrrolyl, 3-pyrrolyl, 2-furyl, 3-furyl, 2-thienyl, 3-thienyl, 1-imidazolyl, 2-imidazolyl, 4-imidazolyl, 5-imidazolyl, 1-pyrazolyl, 3-pyrazolyl, 4-pyrazolyl, 5-pyrazolyl, 2-oxazolyl, 4-oxazolyl, 5-oxazolyl, 2-thiazolyl, 4-thiazolyl, 5-thiazolyl, 3-isoxazolyl, 4-isoxazolyl, 5-isoxazolyl, 3-isothiazolyl, 4-isothiazolyl, or 5-isothiazolyl.

Specifically, the heterocyclic group may be 4-(1,2,3-thiadiazolyl), 5-(1,2,3-thiadiazolyl), 3-(1,2,5-thiadiazolyl), 2-(1,3,4-thiadiazolyl), 4-(1,2,3-oxadiazolyl), 5-(1,2,3-oxadiazolyl), 3-(1,2,4-oxadiazolyl), 5-(1,2,4-oxadiazolyl), 3-(1,2,5-oxadiazolyl), 2-(1,3,4-oxadiazolyl), 1-(1,2,3-triazolyl), 4-(1,2,3-triazolyl), 5-(1,2,3-triazolyl), 1-(1,2,4-triazolyl), 3-(1,2,4-triazolyl), or 5-(1,2,4-triazolyl).

Specifically, the heterocyclic group may be 1-tetrazolyl, 5-tetrazolyl, 1-indolyl, 2-indolyl, 3-indolyl, 4-indolyl, 5-indolyl, 6-indolyl, 7-indolyl, 1-isoindolyl, 2-isoindolyl, 3-isoindolyl, 4-isoindolyl, 5-isoindolyl, 6-isoindolyl, 7-isoindolyl, 1-benzimidazolyl, 2-benzimidazolyl, 4-benzimidazolyl, 5-benzimidazolyl, 6-benzimidazolyl, or 7-benzimidazolyl.

Specifically, the heterocyclic group may be 2-benzofuranyl, 3-benzofuranyl, 4-benzofuranyl, 5-benzofuranyl, 6-benzofuranyl, 7-benzofuranyl, 1-isobenzofuranyl, 3-isobenzofuranyl, 4-isobenzofuranyl, 5-isobenzofuranyl, 6-isobenzofuranyl, 7-isobenzofuranyl, 2-benzothienyl, 3-benzothienyl, 4-benzothienyl, 5-benzothienyl, 6-benzothienyl, or 7-benzothienyl.

Specifically, the heterocyclic group may be 2-benzoxazolyl, 4-benzoxazolyl, 5-benzoxazolyl, 6-benzoxazolyl, 7-benzoxazolyl, 2-benzothiazolyl, 4-benzothiazolyl, 5-benzothiazolyl, 6-benzothiazolyl, 7-benzothiazolyl, 1-indazolyl, 3-indazolyl, 4-indazolyl, 5-indazolyl, 6-indazolyl, 7-indazolyl, 2-morpholyl, 3-morpholyl, 4-morpholyl, 1-piperazyl, 2-piperazyl, 1-piperidyl, 2-piperidyl, 3-piperidyl, or 4-piperidyl.

Specifically, the heterocyclic group may be 2-tetrahydropyranyl, 3-tetrahydropyranyl, 4-tetrahydropyranyl, 2-tetrahydrothiopyranyl, 3-tetrahydrothiopyranyl, 4-tetrahydrothiopyranyl, 1-pyrrolidyl, 2-pyrrolidyl, 3-pyrrolidyl, furanyl, 2-tetrahydrofuranyl, 3-tetrahydrofuranyl, 2-tetrahydrothienyl, 3-tetrahydrothienyl, 5-methyl-3-oxo-2,3-dihydro-1H-pyrazol-4-yl, or the like.

The aryl group is not particularly limited. Specifically, the aryl group may be phenyl, biphenyl, naphthyl, dihydroindenyl, 9H-fluorenyl, or the like.

The alkyl group is not particularly limited. Examples of alkyl groups include linear, branched, or cyclic alkyl groups. Specifically, the alkyl group may be a linear or branched alkyl group having 1 to 4 carbon atoms, such as methyl, ethyl, n-propyl, isopropyl, n-butyl, isobutyl, s-butyl, t-butyl, and 1-ethylpropyl.

Specifically, the alkyl group may be a linear or branched alkyl group having 5 to 18 carbon atoms, such as n-pentyl, isopentyl, neopentyl, n-hexyl, isohexyl, 3-methylpentyl, n-heptyl, n-octyl, n-nonyl, n-decyl, n-undecyl, n-dodecyl, 5-propylnonyl, n-tridecyl, n-tetradecyl, n-pentadecyl, hexadecyl, heptadecyl, and octadecyl.

Specifically, the alkyl group may further be a cyclic alkyl group having 3 to 8 carbon atoms, such as cyclopropyl, cyclobutyl, cyclopentyl, cyclohexyl, cycloheptyl, and cyclooctyl.

The alkoxy group is not particularly limited. Examples of alkoxy groups include linear, branched, or cyclic alkoxy groups. Specifically, the alkoxy group may be a linear or branched alkoxy group, such as methoxy, ethoxy, n-propoxy, isopropoxy, n-butoxy, t-butoxy, n-pentyloxy, neopentyloxy, and n-hexyloxy.

Specifically, the alkoxy group may be a cyclic alkoxy group, such as cyclopropyloxy, cyclobutyloxy, cyclopentyloxy, cyclohexyloxy, cycloheptyloxy, and cyclooctyloxy.

The alkylthio group is not particularly limited. Examples of alkylthio groups include linear, branched, or cyclic alkylthio groups. Specifically, the alkylthio group may be a linear or branched alkylthio group, such as methylthio, ethylthio, n-propylthio, isopropylthio, n-butylthio, t-butylthio, n-pentylthio, neopentylthio, and n-hexylthio groups.

Specifically, the alkylthio group may be a cyclic alkylthio group, such as cyclopropylthio, cyclobutylthio, cyclopentylthio, cyclohexylthio, cycloheptylthio, and cyclooctylthio groups.

In Formulas (4a), (4b), (4c), and (4d), y1 and y2 are preferably the same or different and each represent a heterocyclic group containing at least one element selected from the group consisting of nitrogen (N), oxygen (O), and sulfur (S).

### Compound Represented by Formula (1) and/or Salt Thereof

The compound represented by Formula (1) and/or a salt thereof is preferably at least one compound selected from the group consisting of the following compounds: 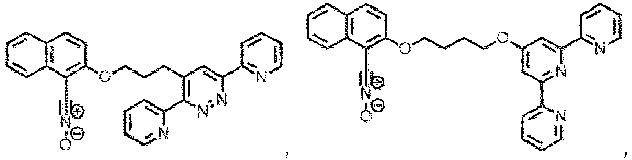 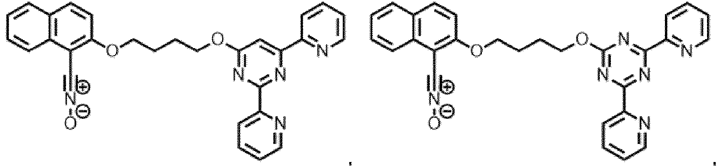 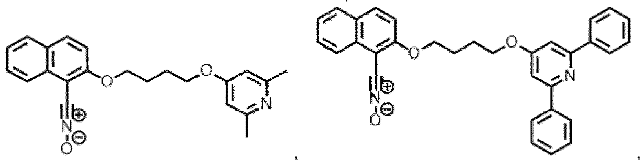 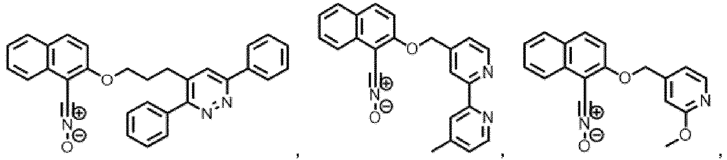 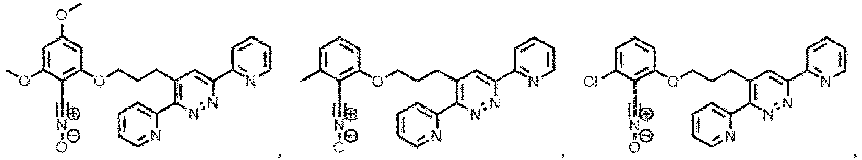 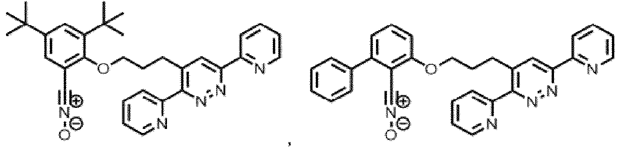 and/or at least one salt thereof.

The compound represented by Formula (1) may be in the form of a salt. The salt of the compound represented by Formula (1) is not particularly limited, and includes all types of salts.

Examples of such salts include inorganic acid salts, such as hydrochlorides, sulfates, and nitrates; organic acid salts, such as acetates and methanesulfonates; alkali metal salts, such as sodium salts and potassium salts; alkaline earth metal salts, such as magnesium salts and calcium salts; and ammonium salts, such as dimethylammonium salts and triethylammonium salts.

The rubber composition of the present invention contains the compound represented by Formula (1) and/or a salt thereof in an amount of 0.01 parts by mass to 30 parts by mass, preferably 0.1 parts by mass to 20 parts by mass, more preferably 0.2 parts by mass to 10 parts by mass, even more preferably 0.25 parts by mass to 5 parts by mass, and particularly preferably 0.3 parts by mass to 3 parts by mass, per 100 parts by mass of the rubber component.

In the rubber composition of the present invention, the compound represented by Formula (1) and/or a salt thereof is present in an amount of preferably 0.01 parts by mass to 30 parts by mass, preferably 0.1 parts by mass to 20 parts by mass, more preferably 0.2 parts by mass to 10 parts by mass, even more preferably 0.25 parts by mass to 5 parts by mass, and particularly preferably 0.3 parts by mass to 3 parts by mass, per 100 parts by mass of the total amount of the isoprene rubber and/or natural rubber.

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

Of the triazyl, pyridyl, pyridazyl, pyrazyl, and pyrimidyl groups optionally having a substituent at the substitutable position, a triazyl, pyridyl, pyridazyl, or pyrimidyl group having a specific substituent is preferred, and a pyridazyl or pyridyl group having a specific heterocyclic group is more preferred.

### [1-3] Carbon Black and/or Inorganic Filler

The rubber composition of the present invention preferably further contains carbon black and/or an inorganic filler. In the present specification, the inorganic filler does not include carbon black.

### Carbon Black

The carbon black is used to improve reinforcement of the rubber. Allowing carbon black to be present in the rubber component makes it possible to reduce the electrical resistance of the rubber to suppress electrification and further improve the strength of the rubber.

The carbon black is not particularly limited. The carbon black may be, for example, commercially available carbon black, a carbon-silica dual-phase filler, or the like.

The carbon black is preferably a high-, middle-, or low-structure SAF, ISAF, IISAF, N110, N134, N220, N234, N330, N339, N375, N550, HAF, FEF, GPF, or SRF-grade carbon black. Preferred carbon black includes SAF, ISAF, IISAF, N134, N234, N330, N339, N375, HAF, and FEF-grade carbon black.

The DBP absorption of the carbon black is preferably 60 cm³/100 g to 200 cm³/100 g, more preferably 70 cm³/100 g to 180 cm³/100 g, and particularly preferably 80 cm³/100 g to 160 cm³/100 g.

The nitrogen adsorption-based specific surface area (N₂SA) of carbon black is measured in accordance with JISK6217-2:2001. The nitrogen adsorption-based specific surface area of carbon black is preferably 30 m²/g to 200 m²/g, more preferably 40 m²/g to 180 m²/g, and particularly preferably 50 m²/g to 160 m²/g.

### Inorganic Filler

The inorganic filler is not particularly limited. Any inorganic compound commonly used in the rubber industry may be used.

The inorganic compound is preferably silica.

The inorganic compound is preferably alumina (Al₂O₃), such as γ-alumina or α-alumina.

The inorganic compound is preferably an alumina monohydrate (Al₂O₃·H₂O), such as boehmite or diaspore.

The inorganic compound is preferably an aluminum hydroxide [Al(OH)₃], such as gibbsite or bayerite.

The inorganic compound is preferably a crystalline aluminosilicate containing hydrogen, an alkali metal, or an alkaline earth metal that compensates for charge, like various zeolites.

Preferred inorganic compounds include aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], magnesium aluminum oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminum silicates (Al₂SiO₅, Al₄·3SiO₄·5H₂O, etc.), magnesium silicates (Mg₂SiO₄, MgSiO₃, etc.), calcium silicates (Ca₂·SiO₄, etc.), aluminum calcium silicates (Al₂O₃·CaO·2SiO₂, etc.), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], zinc acrylate, and zinc methacrylate.

To enhance affinity with the rubber component, the inorganic filler may preferably have the surface of the inorganic compound organically treated.

The inorganic filler is preferably silica from the viewpoint of imparting rubber strength.

The silica is preferably precipitated silica, fumed silica, or colloidal silica, and more preferably precipitated silica.

To enhance affinity with the rubber component, the silica may preferably have the surface organically treated.

The BET specific surface area of the silica is measured in accordance with ISO 5794/1. The BET specific surface area of silica is preferably 40 m²/g to 350 m²/g. Silica having a BET specific surface area within this range is advantageous in that rubber reinforcement and dispersibility in the rubber component can both be achieved. The BET specific surface area of silica is more preferably 80 m²/g to 300 m²/g, even more preferably 100 m²/g to 270 m²/g, and particularly preferably 110 m²/g to 270 m²/g.

Examples of commercially available silica include HD165MP (trade name, BET specific surface area: 165 m²/g), HD115MP (trade name, BET specific surface area: 115 m²/g), HD200MP (trade name, BET specific surface area: 200 m²/g), and HD250MP (trade name, BET specific surface area: 250 m²/g), all available from Quechen Silicon Chemical Co., Ltd.; Nipsil AQ (trade name, BET specific surface area: 205 m²/g) and Nipsil KQ (trade name, BET specific surface area: 240 m²/g), both available from Tosoh Silica Corporation; and Ultrasil VN3 (trade name, BET specific surface area: 175 m²/g), available from Degussa AG.

As the carbon black and/or inorganic filler, any of the above carbon black and/or inorganic fillers can be used singly, or as a mixture (blend) of two or more.

### Amount of Carbon Black and/or Inorganic Filler

The rubber composition of the present invention contains carbon black and/or an inorganic filler in an amount of preferably 20 parts by mass to 200 parts by mass, more preferably 30 parts by mass to 150 parts by mass, and even more preferably 35 parts by mass to 110 parts by mass, per 100 parts by mass of the rubber component.

When carbon black and an inorganic filler are both added, the total amount of these components may be appropriately adjusted so as to fall within the above range.

The amount of the carbon black and/or inorganic filler is preferably 20 parts by mass or more from the viewpoint of improving reinforcement of the rubber composition, and is preferably 200 parts by mass or less from the viewpoint of improving tear strength.

The amount of the carbon black is preferably 2 parts by mass to 200 parts by mass, more preferably 30 parts by mass to 130 parts by mass, and even more preferably 35 parts by mass to 100 parts by mass, per 100 parts by mass of the rubber component.

From the viewpoint of ensuring anti-static performance and rubber strength performance, the amount of carbon black is preferably 2 parts by mass or more. From the viewpoint of improving tear strength, the amount is preferably 200 parts by mass or less.

The amount of the inorganic filler is preferably 2 parts by mass to 200 parts by mass, more preferably 30 parts by mass to 130 parts by mass, and even more preferably 35 parts by mass to 100 parts by mass, per 100 parts by mass of the rubber component.

When silica is used as the inorganic filler, the amount of silica is preferably 2 parts by mass to 200 parts by mass, more preferably 30 parts by mass to 130 parts by mass, and even more preferably 35 parts by mass to 100 parts by mass, per 100 parts by mass of the rubber component.

### Silane Coupling Agent etc.

When the rubber composition of the present invention contains an inorganic filler, such as carbon black or silica, a coupling agent, such as a silane coupling agent, a titanate coupling agent, an aluminate coupling agent, or a zirconate coupling agent, may be added to the rubber composition for the purpose of enhancing reinforcement of the rubber composition by carbon black, silica, or the like, or for the purpose of enhancing tear strength and wear resistance of the rubber composition.

A preferred silane coupling agent is, for example, a sulfide-, polysulfide-, thioester-, thiol-, olefin-, epoxy-, amino-, or alkyl-based silane coupling agent.

A preferred titanate coupling agent is, for example, an alkoxide-, chelate-, or acylate-based titanate coupling agent.

A preferred zirconate coupling agent is, for example, an alkoxide-, chelate-, or acylate-based zirconate coupling agent.

As the silane, titanate, aluminate, or zirconate coupling agent, any of the above silane, titanate, aluminate, or zirconate coupling agents may be used singly, or as a mixture (blend) of two or more.

The rubber composition of the present invention contains a silane, titanate, aluminate, or zirconate coupling agent in an amount of preferably 0.1 parts by mass to 20 parts by mass and more preferably 3 parts by mass to 15 parts by mass per 100 parts by mass of the carbon black and/or inorganic filler. When the amount of a silane, titanate, aluminate, or zirconate coupling agent is 0.1 parts by mass or more per 100 parts by mass of the carbon black and/or inorganic filler, the effect of improving tear strength of the rubber composition can be more suitably achieved. When the amount is 20 parts by mass or less, the cost of the rubber composition can be reduced, thereby improving economic efficiency.

### [1-4] Other Additives

The rubber composition of the present invention contains a rubber component, a compound represented by Formula (1) and/or a salt thereof, and if necessary, carbon black and/or an inorganic filler. In addition, additives commonly used in the rubber industry may be suitably selected and added to the rubber composition.

Examples of additives include antioxidants, ozone protectants, softeners, processing aids, waxes, resins, foaming agents, oils, zinc oxide (ZnO), stearic acid, vulcanization accelerators, vulcanization retarders, and vulcanizing agents (e.g., sulfur).

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

### [2] Heat-buildup-reducing Agent for Rubber

The present invention encompasses a heat-buildup-reducing agent for rubber, containing a compound represented by the following Formula (1) and/or a salt thereof.

X-A-Y (1)

In Formula (1), X represents a functional group having a nitrile oxide group.

In Formula (1), A represents a spacer segment.

In Formula (1), Y represents triazyl, pyridyl, pyridazyl, pyrazyl, or pyrimidyl, all of which optionally have a substituent at a substitutable position.

In Formula (1), Y preferably represents at least one functional group selected from the group consisting of the following Formulas: (4a), (4b), (4c), and (4d).

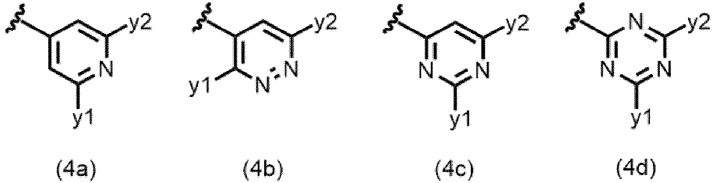

In Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

In Formula (1), X preferably represents at least one functional group having a nitrile oxide group selected from the group consisting of the following Formulas (2a) and (2b).

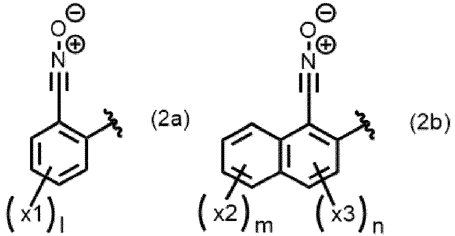

In Formula (2a), x1 represents a hydrogen atom, an alkyl group, an alkoxy group, an aryl group, or a halogen atom, and l represents an integer of 1 to 4. In Formula (2a), when l is 2 or more, x1 may be the same or different.

In Formula (2b), x2 represents a hydrogen atom, an alkyl group, an alkoxy group, an aryl group, or a halogen atom, and m represents an integer of 1 to 4. In Formula (2b), when m is 2 or more, x2 may be the same or different.

In Formula (2b), x3 represents a hydrogen atom, an alkyl group, an alkoxy group, an aryl group, or a halogen atom, and n represents an integer of 1 to 2. In Formula (2b), when n is 2, x3 may be the same or different.

In Formula (1), A preferably represents a spacer segment represented by the following Formula (3).

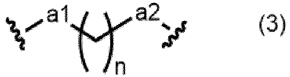

In Formula (3), a1 and a2 are preferably the same or different and each represent at least one element selected from the group consisting of CH₂, NH, oxygen (O), and sulfur (S).

In Formula (3), n preferably represents an integer of 0 to 10.

The compound represented by Formula (1) and/or a salt thereof is preferably at least one compound selected from the group consisting of the following compounds: 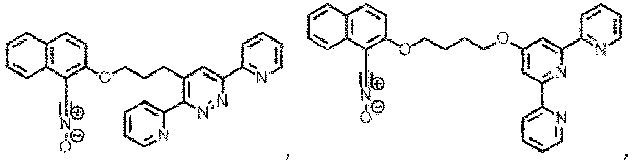 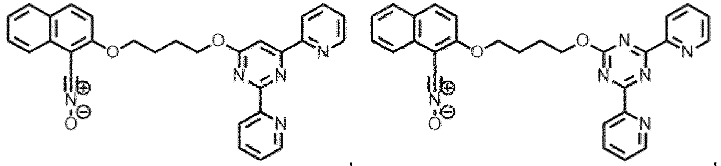 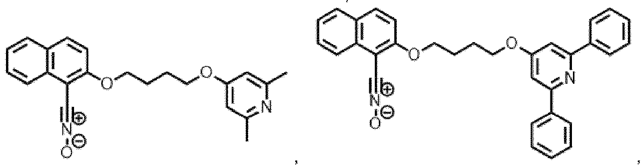 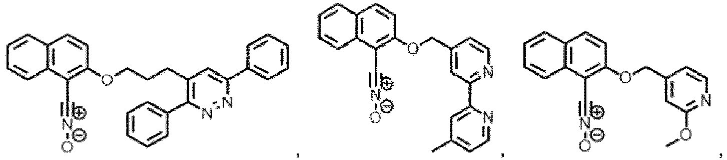 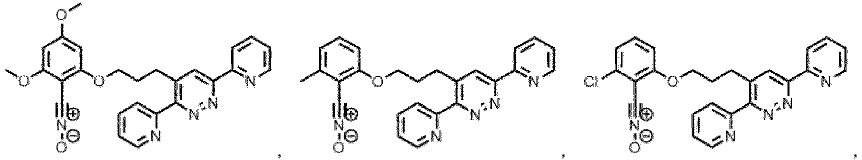 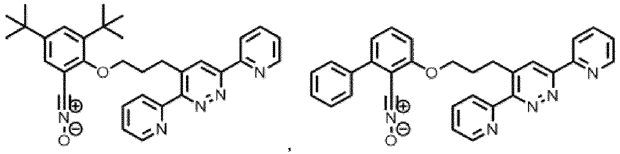 and/or at least one salt thereof.

For the compound represented by Formula (1) and/or a salt thereof contained in the heat-buildup-reducing agent for rubber of the present invention, the explanation in section "[1] Rubber Composition" above is applied.

The heat-buildup-reducing agent for rubber of the present invention allows vulcanized rubber to exhibit excellent low heat build-up because the agent containing a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, is applied to a rubber component. A tire produced by applying this heat-buildup-reducing agent for rubber to a rubber component exhibits improved fuel efficiency.

Of the triazyl, pyridyl, pyridazyl, pyrazyl, and pyrimidyl groups optionally having a substituent at the substitutable position, a triazyl, pyridyl, pyridazyl, or pyrimidyl group having a specific substituent is preferred, and a pyridazyl or pyridyl group having a specific heterocyclic group is more preferred.

### [3] Method for Producing Rubber Composition

The present invention encompasses a method for producing the rubber composition of the present invention.

The method for producing the rubber composition is preferably any of the following methods 1 to 3.

### Method 1

A method comprising the steps of:
(1) kneading a rubber component, and a compound represented by Formula (1) and/or a salt thereof to prepare a masterbatch (MB);
(2) mixing components such as carbon black and/or an inorganic filler with the MB obtained in step (1) and subsequently kneading the resulting mixture to prepare an unvulcanized rubber composition; and
(3) mixing a vulcanizing agent (such as sulfur) with the unvulcanized rubber composition obtained in step (2) and subsequently kneading the resulting mixture.

### Method 2

A method comprising the steps of:
(1) kneading a rubber component, and a compound represented by Formula (1) and/or a salt thereof, mixing components such as carbon black and/or an inorganic filler therewith, and subsequently kneading the resulting mixture to prepared an unvulcanized rubber composition; and
(2) mixing a vulcanizing agent (such as sulfur) with the unvulcanized rubber composition obtained in step (1) and subsequently kneading the resulting mixture.

### Method 3

A method comprising the steps of:
(1) kneading a rubber component, a compound represented by Formula (1) and/or a salt thereof, and components such as carbon black and/or an inorganic filler; and
(2) mixing a vulcanizing agent (such as sulfur) with the unvulcanized rubber composition obtained in step (1) and subsequently kneading the resulting mixture.

For the rubber component, compound represented by Formula (1) and/or a salt thereof, and the like used in the method for producing the rubber composition of the present invention, the explanation in section "[1] Rubber Composition" above is applied.

### Method 1

### Step (1): Preparation of MB

In step (1), a rubber component, and a compound represented by Formula (1) and/or a salt thereof are mixed to prepare a masterbatch (MB). In step (1), an antioxidant, wax, etc. may be mixed.

In step (1), the amount of the compound represented by Formula (1) and/or a salt thereof is 0.01 parts by mass to 30 parts by mass, preferably 0.1 parts by mass to 20 parts by mass, more preferably 0.2 parts by mass to 10 parts by mass, even more preferably 0.25 parts by mass to 5 parts by mass, and particularly preferably 0.3 parts by mass to 3 parts by mass, per 100 parts by mass of the rubber component.

In step (1), the kneading temperature is preferably 60°C to 190°C, more preferably 70°C to 160°C, and even more preferably 80°C to 150°C. When the kneading temperature is adjusted to 60°C to 190°C, the reaction proceeds smoothly, and deterioration of the rubber can be suppressed.

In step (1), the kneading time is preferably 10 seconds to 20 minutes, more preferably 30 seconds to 10 minutes, and even more preferably 60 seconds to 7 minutes. When the kneading time is adjusted to 10 seconds to 20 minutes, the reaction proceeds smoothly, and the productivity can be improved.

### Step (2)

In step (2), starting materials including carbon black and/or an inorganic filler are added to the MB obtained in step (1), and, if necessary, an antioxidant, wax, stearic acid, etc. are added, followed by kneading, thereby preparing an unvulcanized rubber composition.

In the kneading method, the entire amount of each of the components may be kneaded at once, or the components may be each added in portions according to the intended purpose, such as viscosity adjustment, and then kneaded. In the kneading method, kneading may be repeated to allow the components to be uniformly dispersed.

In step (2), the kneading temperature is set such that the upper temperature limit of the mixture is preferably 100°C to 190°C, more preferably 130°C to 175°C, and even more preferably 110°C to 170°C.

In step (2), the kneading time is preferably 10 seconds to 20 minutes, more preferably 30 seconds to 10 minutes, and even more preferably 60 seconds to 8 minutes.

When proceeding from step (2) to step (3), the mixture is preferably allowed to stand (cured, or aged) such that the maximum temperature of the mixture becomes 60°C or lower.

### Step (3)

In step (3), a vulcanizing agent (such as sulfur) is added to the mixture (unvulcanized rubber composition) obtained in step (2), and, if necessary, zinc oxide, a vulcanization accelerator, etc. are added, followed by mixing, thereby preparing an unvulcanized rubber composition. Step (3) is the final stage of kneading.

Step (3) is preferably performed under heating. The heating temperature is preferably 60°C to 120°C, and more preferably 65°C to 100°C.

In step (3), the mixing (or kneading) time is preferably 10 seconds to 20 minutes, more preferably 30 seconds to 10 minutes, and even more preferably 60 seconds to 5 minutes.

When proceeding from step (3) to the vulcanization step, the mixture is preferably allowed to stand (cured, or aged) such that the maximum temperature of the mixture becomes 70°C or lower.

### Method 2

### Step (1)

In step (1), a rubber component, and a compound represented by Formula (1) and/or a salt thereof are mixed, and subsequently, components such as carbon black and/or an inorganic filler are mixed with the resulting mixture. In step (1), prior to mixing the components such as carbon black and/or an inorganic filler, an antioxidant, wax, etc. may be mixed with the resulting mixture.

In step (1), the amount of the compound represented by Formula (1) and/or a salt thereof is 0.01 parts by mass to 30 parts by mass, preferably 0.1 parts by mass to 20 parts by mass, more preferably 0.2 parts by mass to 10 parts by mass, even more preferably 0.25 parts by mass to 5 parts by mass, and particularly preferably 0.3 parts by mass to 3 parts by mass, per 100 parts by mass of the rubber component.

In step (1), the temperature at which the rubber component, and the compound represented by Formula (1) or a salt thereof are mixed is preferably 60°C to 190°C, more preferably 70°C to 160°C, and even more preferably 80°C to 150°C. When the mixing temperature is adjusted to 60°C to 190°C, the reaction proceeds smoothly, and deterioration of the rubber can be suppressed.

In step (1), the time for mixing the rubber component, and the compound represented by Formula (1) and/or a salt thereof is preferably 10 seconds to 20 minutes, more preferably 30 seconds to 10 minutes, and even more preferably 60 seconds to 8 minutes. When the mixing time is adjusted to 10 seconds to 20 minutes, the reaction proceeds smoothly, and the productivity can be improved.

In step (1), the temperature at which the components such as carbon black and/or an inorganic filler are further mixed is set such that the upper temperature limit of the mixture is preferably 100°C to 190°C, more preferably 100°C to 175°C, and even more preferably 110°C to 170°C.

In step (1), the time for further mixing the components such as carbon black and/or an inorganic filler is preferably 10 seconds to 20 minutes, more preferably 30 seconds to 10 minutes, and even more preferably 60 seconds to 8 minutes.

When proceeding from step (1) to step (2), the mixture is preferably allowed to stand (cured, or aged) such that the maximum temperature of the mixture becomes 60°C or lower.

In the kneading method, the entire amount of each of the components may be kneaded at once, or the components may be each added in portions according to the intended purpose, such as viscosity adjustment, and then kneaded. In the kneading method, kneading may be repeated to allow the components to be uniformly dispersed.

### Step (2)

In step (2), a vulcanizing agent (such as sulfur) is added to the mixture (unvulcanized rubber composition) obtained in step (1), and, if necessary, zinc oxide, a vulcanization accelerator, etc. are added, followed by mixing, thereby preparing an unvulcanized rubber composition. Step (2) is the final stage of kneading.

Step (2) is preferably performed under heating. The heating temperature is preferably 60°C to 120°C, and more preferably 65°C to 100°C.

In step (2), the mixing (or kneading) time is preferably 10 seconds to 20 minutes, more preferably 30 seconds to 10 minutes, and even more preferably 60 seconds to 5 minutes.

When proceeding from step (2) to the vulcanization step, the mixture is preferably allowed to stand (cured, or aged) such that the maximum temperature of the mixture becomes 70°C or lower.

### Method 3

### Step (1)

In step (1), a rubber component, a compound represented by Formula (1) and/or a salt thereof, and components such as carbon black and/or an inorganic filler are kneaded.

In step (1), the amount of the compound represented by Formula (1) and/or a salt thereof is 0.01 parts by mass to 30 parts by mass, preferably 0.1 parts by mass to 20 parts by mass, more preferably 0.2 parts by mass to 10 parts by mass, even more preferably 0.25 parts by mass to 5 parts by mass, and particularly preferably 0.3 parts by mass to 3 parts by mass, per 100 parts by mass of the rubber component.

In step (1), the mixing temperature is preferably 60°C to 190°C, more preferably 70°C to 160°C, and even more preferably 80°C to 150°C. When the mixing temperature is adjusted to 60°C to 190°C, the reaction proceeds smoothly, and deterioration of the rubber can be suppressed.

In step (1), the kneading temperature (the mixing time) is preferably 10 seconds to 20 minutes, more preferably 30 seconds to 10 minutes, and even more preferably 60 seconds to 7 minutes. When the mixing time is adjusted to 10 seconds to 20 minutes, the reaction proceeds smoothly, and the productivity can be improved.

When proceeding from step (1) to step (2), the mixture is preferably allowed to stand (cured, or aged) such that the maximum temperature of the mixture becomes 60°C or lower.

In the kneading method, kneading may be repeated to allow the components to be uniformly dispersed.

### Step (2)

In step (2), a vulcanizing agent (such as sulfur) is added to the mixture (unvulcanized rubber composition) obtained in step (1), and, if necessary, zinc oxide, a vulcanization accelerator, etc. are added, followed by mixing, thereby preparing an unvulcanized rubber composition. Step (2) is the final stage of kneading.

Step (2) is preferably performed under heating. The heating temperature is preferably 60°C to 120°C, and more preferably 65°C to 100°C.

In step (2), the mixing (or kneading) time is preferably 10 seconds to 20 minutes, more preferably 30 seconds to 10 minutes, and even more preferably 60 seconds to 5 minutes.

When proceeding from step (2) to the vulcanization step, the mixture is preferably allowed to stand (cured, or aged) such that the maximum temperature of the mixture becomes 70°C or lower.

### Vulcanization Step

A vulcanizing agent (such as sulfur) is mixed with the rubber composition (unvulcanized rubber composition), and the resulting mixture is vulcanized by heating (150°C × 25 minutes) using a vulcanizing press to obtain a vulcanized rubber composition.

### Addition of Other Additives

In the method for producing the rubber composition of the present invention, in steps (1) to (3) of methods 1 to 3, if necessary, various additives, such as antioxidants, wax, stearic acid, zinc oxide, and vulcanization accelerators, may be added. The other additives may be added in any one of steps (1) to (3) of methods 1 to 3, or may be added separately in step (1), step (2), and step (3).

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

### [4] Tire

The present invention encompasses a tire produced using the rubber composition of the present invention.

The rubber composition of the present invention is mixed or kneaded using a Banbury mixer, a roll mill, an intensive mixer, a kneader, a single-screw extruder, a twin-screw extruder, or the like. Subsequently, the rubber composition is extruded in an extrusion step, and shaped into treads or sidewalls members, for example.

Subsequently, the rubber composition is assembled and shaped on a tire building machine to form a green tire by a usual method. The green tire is heated and pressurized in a vulcanization machine, whereby a vulcanized tire can be obtained.

### Tire and Other Applications

A tire is produced using the rubber composition of the present invention. Preferred tires include pneumatic tires (such as radial-ply tires and bias tires) and solid tires. Preferred tire applications include passenger car tires, heavy-duty tires, motorcycle tires, studless tires, and large tires for trucks, buses, and the like. A more preferred and suitable tire application is passenger car tires.

The shape, structure, size, and material of the tire are not particularly limited, and are appropriately selected according to the purpose.

Preferred examples of tire members include a tread portion, a sidewall portion, a bead area portion, a belt portion, a carcass portion, and a shoulder portion, with a tire tread portion, a sidewall portion, and the like being more preferable.

The tread portion is a portion that has a tread pattern and that comes into direct contact with the road surface. It is a tire casing portion for protecting the carcass and preventing wear and flaws, and refers to a cap tread that constitutes the grounding part of a tire and/or to a base tread that is disposed inside the cap tread.

The sidewall portion is a portion extending from the lower side of the shoulder portion to the bead area portion of a pneumatic radial-ply tire. The sidewall portion protects the carcass and is subjected to the greatest bending during driving.

The bead area portion is a portion that plays a role in anchoring both ends of the carcass cords and simultaneously holding the tire to the rim. Beads are composed of bundles of high carbon steel.

The belt portion is a reinforcing band disposed between the carcass and the tread of a radial structure in the circumferential direction. The belt portion tightens the carcass in a manner similar to a barrel hoop, thereby enhancing the rigidity of the tread.

The carcass portion is a cord layer portion that forms the framework of the tire. The carcass portion plays a role in bearing the load, impact, and filled air pressure applied to the tire.

The shoulder portion is located at the shoulder of the tire, and plays a role in protecting the carcass.

The tire is produced by any conventionally method in the field of tires. The tire is filled with ordinary air, or air having an adjusted oxygen partial pressure; or an inert gas, such as nitrogen, argon, or helium.

The rubber composition of the present invention can be used not only for tire applications but also, preferably, for various rubber members such as anti-vibration rubber, seismicisolation rubber, and belts including conveyor belts.

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

### Examples

The present invention is specifically described with reference to Production Examples and Examples. However, the following examples are only illustrative, and are not intended to limit the present invention to these.

### [1] Production of Rubber Compositions of Examples and Comparative Examples

### [1-1] Production of Compounds A and B

### Production Example 1: Production of Compound A

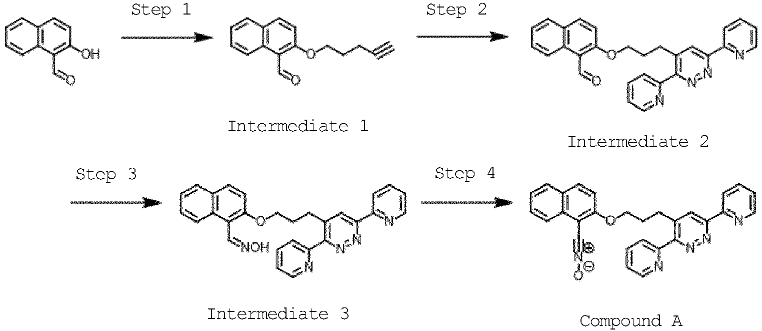

### Step 1

To a solution of 113.6 g of 2-hydroxy-1-naphthaldehyde and 81.2 g of 5-chloro-1-pentyne in 300 mL of DMF (N,N-dimethylformamide), 109.5 g of potassium carbonate was added, and the mixture was allowed to react at 100°C for 24 hours. After the reaction mixture was cooled, 1500 mL of water was added to stop the reaction, and the precipitated solid was filtered, washed with hexane, and dried to obtain 157.2 g of intermediate 1 (yield: 99%).

¹H-NMR (500 MHz, DMSO-d₆, δppm) : 10.81 (1H, s), 9.11 (1H, m), 8.28 (1H, m), 7.95 (1H, s), 7.65 (1H, m), 7.63 (1H, m), 7.46 (1H, m), 4.38 (2H, t), 2.85 (1H, t), 2.42 (2H, m), 2.02 (2H, m)

### Step 2

To a solution of 157.2 g of intermediate 1 in 450 mL of toluene, 141.7 g of 3,6-bis(2-pyridyl)-1,2,4,5-tetrazine was added, and the mixture was refluxed for 24 hours. After the reaction mixture was cooled, the precipitated solid was filtered, washed with toluene, and dried to obtain 244.2 g of intermediate 2 (yield: 91%).

¹H-NMR (500 MHz, DMSO-d₆, δppm): 10.63 (1H, s), 9.11 (1H, m), 8.74 (1H, m), 8.65 (1H, s), 8.61 (2H, m), 8.23 (1H, m), 8.05 (1H, m), 7.97 (2H, m), 7.92 (1H, m), 7.65 (1H, m), 7.60 (1H, m), 7.55 (3H, m), 4.32 (2H, t), 3.26 (2H, m), 2.14 (2H, m)

### Step 3

To a solution of 244.2 g of intermediate 2 in 800 mL of methanol, 114.0 g of hydroxylamine hydrochloride was added, and the mixture was allowed to react at 60°C for 24 hours. After the reaction mixture was cooled, 1600 mL of water was added to stop the reaction, and the precipitated solid was filtered, washed with water, and dried to obtain 248.5 g of intermediate 3 (yield: 99%).

¹H-NMR (500 MHz, DMSO-d₆, δppm): 11.29 (1H, s), 8.85 (1H, m), 8.70 (1H, m), 8.60 (1H, m), 8.59 (3H, m), 8.00 (5H, m), 7.57 (2H, m), 7.40 (3H, m), 4.21 (2H, m), 3.23 (2H, m), 2.10 (2H, m)

### Step 4

To a solution of 22.4 g of intermediate 3 in 100 mL of methylene chloride, 7.26 g of N-chlorosuccinimide was added while cooling in an ice bath. The mixture was then heated to room temperature and allowed to react for 24 hours. 500 mL of a saturated sodium hydrogen carbonate aqueous solution was added to the reaction mixture to stop the reaction, and the methylene chloride layer was separated, washed with water, and then concentrated. The obtained solid was washed with acetone and dried to obtain 20.1 g of the desired compound A (yield: 90%).

¹H-NMR (500 MHz, CDCl₃, δppm): 8.73 (1H, m), 8.66 (2H, m), 8.57 (1H, s), 8.14 (1H, m), 7.96 (1H, m), 7.85 (4H, m), 7.61 (1H, m), 7.45 (1H, m), 7.38 (1H, m), 7.32 (1H, m), 7.17 (1H, m), 4.24 (2H, t), 3.68 (2H, m), 2.33 (2H, m)

### Production Example 2: Production of Compound B

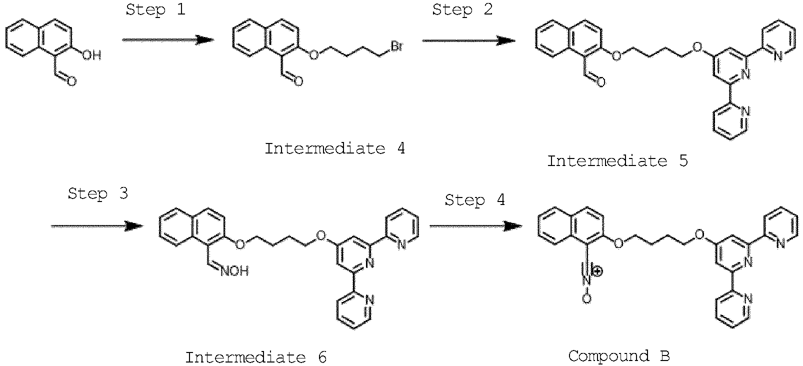

### Step 1

To a solution of 51.7 g of 2-hydroxy-1-naphthaldehyde and 194.3 g of 1,4-dibromobutane in 450 mL of acetone, 82.9 g of potassium carbonate was added, and the mixture was refluxed for 24 hours. After the reaction mixture was cooled, 500 mL of water was added to stop the reaction, and the precipitated solid was filtered. The filtrate was extracted with methylene chloride, and after the solvent was distilled off, purification was performed by silica gel chromatography to obtain 69.5 g of intermediate 4 (yield: 75%).

¹H-NMR (500 MHz, CDCl₃, δppm): 10.92 (1H, s), 9.27 (1H, m), 8.05 (1H, m), 7.77 (1H, m), 7.63 (1H, m), 7.43 (1H, m), 7.26 (1H, m), 4.28 (2H, t), 3.52 (2H, t), 2.11 (4H, m)

### Step 2

To a solution of 40.6 g of intermediate 4 and 31.4 g of 2,6-bis(2-pyridyl)-4(1H)-pyridone in 132 mL of DMF, 20.9 g of potassium carbonate was added, and the mixture was allowed to react at 90°C for 24 hours. After the reaction mixture was cooled, 1000 mL of water was added to stop the reaction, and the precipitated solid was filtered, washed with diethyl ether, and dried to obtain 53.8 g of intermediate 5 (yield: 90%).

¹H-NMR (500 MHz, CDCl₃, δppm): 10.94 (1H, s), 9.27 (1H, m), 8.67 (2H, m), 8.61 (2H, m), 8.00 (3H, m), 7.84 (2H, m), 7.76 (1H, m), 7.62 (1H, m), 7.33 (1H, m), 7.26 (3H, m), 4.34 (4H, m), 2.14 (4H, m)

### Step 3

To a solution of 30.2 g of intermediate 5 in 127 mL of methanol, 8.8 g of hydroxylamine hydrochloride was added, and the mixture was allowed to react at room temperature for 24 hours. 1000 mL of water was added to the reaction mixture to stop the reaction, and the precipitated solid was filtered, washed with methanol, and dried to obtain 29.6 g of intermediate 6 (yield: 95%).

¹H-NMR (500 MHz, CDCl₃, δppm): 10.77 (1H, s), 8.84 (1H, m), 8.71 (2H, m), 8.61 (2H, m), 8.52 (1H, m), 8.03 (2H, s), 7.86 (3H, m), 7.70 (1H, m), 7.50 (1H, m), 7.35 (3H, m), 7.26 (1H, m), 4.38 (2H, m), 4.22 (2H, m), 2.12 (4H, m)

### Step 4

To a solution of 16.4 g of intermediate 6 in 400 mL of methylene chloride, 241.6 g of a 1% sodium hypochlorite aqueous solution was added dropwise while cooling in an ice bath. The mixture was heated to room temperature and allowed to react for 24 hours. The methylene chloride layer was separated, washed with water, and concentrated. The obtained solid was washed with diethyl ether, and dried to obtain 14.7 g of the desired compound B (yield: 90%).

¹H-NMR (500 MHz, CDCl₃, δppm): 8.67 (2H, m), 8.60 (2H, m), 8.02 (2H, s), 7.95 (2H, m), 7.82 (3H, m), 7.60 (1H, m), 7.42 (1H, m), 7.33 (2H, m), 7.26 (1H, m), 4.34 (4H, m), 2.15 (4H, m)

### [1-2] Production of Rubber Compositions

### Step (1): MB Production Step

Masterbatches (MBs) were each prepared by mixing a rubber component and a compound represented by Formula (1) (a crosslinking agent) in the proportions (parts by mass) shown in step (1) of Tables 1 and 2 below.

### Preparation Conditions of MBs of Examples 1 and 3, and Comparative Examples 1 and 3 Corresponding Thereto

Mixing temperature: 140°C
Mixing time: 4 minutes

### Preparation Conditions of MBs of Examples 2 and 4, and Comparative Examples 2 and 4 Corresponding Thereto Mixing temperature: 115°C

Mixing time: 4 minutes

### Step (2)

The components shown in step (2) of Tables 1 and 2 were mixed with each MB obtained in step (1) in the proportions (parts by mass) shown in the tables, followed by kneading using a Banbury mixer. Subsequently, each mixture was allowed to stand (cured, or aged) until the temperature of the mixture became 60°C or lower, thereby producing an unvulcanized rubber composition.

### Step (3)

The components shown in step (3) of Tables 1 and 2 were added to each unvulcanized rubber composition obtained in step (2) in the proportions (parts by mass) shown in the tables, and each mixture was kneaded while adjusting such that the maximum temperature of the mixture became 70°C or lower.

### Vulcanization Step

The unvulcanized rubber compositions were vulcanized by heating at 150°C for 25 minutes using a vulcanizing press to obtain vulcanized rubber compositions (rubber compositions after vulcanization).

### [2] Low Heat Build-up Test: Measurement of Tanδ Value

The tanδ values of the obtained vulcanized rubber compositions were measured using a viscoelasticity measuring device (produced by Metravib) at a temperature of 60°C, a dynamic strain of 5%, and a frequency of 15 Hz.

The Examples are examples containing the compound represented by Formula (1).

The low heat build-up indices of the vulcanized rubber compositions of Examples 1 and 2 were expressed as indices, taking the tanδ values of Comparative Examples 1 and 2 (examples containing no compound represented by Formula (1)) as 100, respectively, and the low heat build-up indices were calculated based on the following equations. 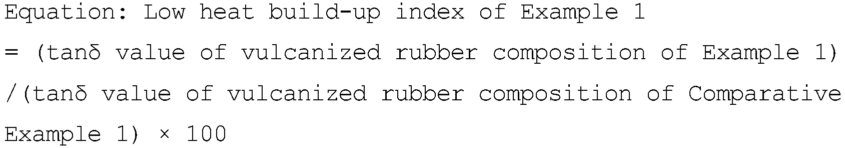 Equation: Low heat build-up index of Example 1 = (tanδ value of vulcanized rubber composition of Example 1) /(tanδ value of vulcanized rubber composition of Comparative Example 1) × 100 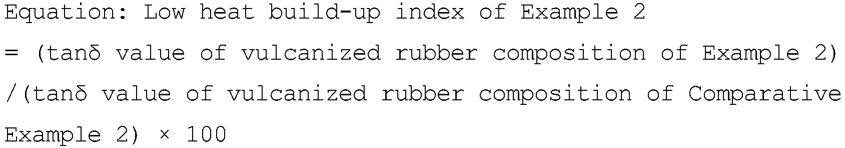 Equation: Low heat build-up index of Example 2 = (tanδ value of vulcanized rubber composition of Example 2) /(tanδ value of vulcanized rubber composition of Comparative Example 2) × 100

A lower value of low heat build-up indices indicates lower heat build-up and less hysteresis loss of the vulcanized rubber composition.

Table 1 shows the results of the low heat build-up index.

**Table 1**

| Table 1 | | | | | |
|---|---|---|---|---|---|
| | | Example 1 | Comparative Example 1 | Example 2 | Comparative Example 2 |
| [1] Formulation for production | | (parts by mass) | | | |
| Step (1) | | | | | |
| | Isoprene rubber | 100 | 100 | 100 | 100 |
| | Compound A represented by Formula (1)^{*1} | **0.5** | - | - | - |
| | Compound B represented by Formula (1)^{*2} | - | - | **0.5** | - |

| Step (2) | | | | | |
|---|---|---|---|---|---|
| | Carbon black^{*3} | 50 | 50 | 50 | 50 |
| | Antioxidant^{*4} | 1 | 1 | 1 | 1 |
| | Wax^{*5} | 1 | 1 | 1 | 1 |
| | Stearic acid | 2 | 2 | 2 | 2 |

| Step (3) | | | | | |
|---|---|---|---|---|---|
| | Zinc oxide | 3 | 3 | 3 | 3 |
| | Vulcanization accelerator^{*6} | 1.4 | 1.4 | 1.4 | 1.4 |
| | Sulfur | 1.1 | 1.1 | 1.1 | 1.1 |

| [2] Results of evaluation test | | (vulcanized rubber composition) | | | |
|---|---|---|---|---|---|
| | Low heat build-up index | **56** | 100 | **47** | 100 |

The low heat build-up indices of the vulcanized rubber compositions of Examples 3 and 4 were expressed as indices, taking the tanδ values of Comparative Examples 3 and 4 (examples containing no compound represented by Formula (1)) as 100, respectively, and the low heat build-up indices were calculated based on the following equations. 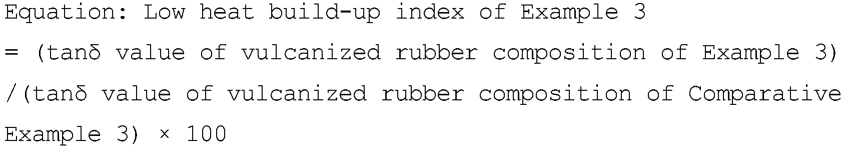 Equation: Low heat build-up index of Example 3 = (tanδ value of vulcanized rubber composition of Example 3) /(tanδ value of vulcanized rubber composition of Comparative Example 3) × 100 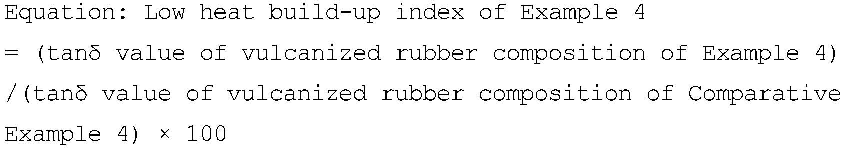 Equation: Low heat build-up index of Example 4 = (tanδ value of vulcanized rubber composition of Example 4) /(tanδ value of vulcanized rubber composition of Comparative Example 4) × 100

A lower value of low heat build-up indices indicates lower heat build-up and less hysteresis loss of the vulcanized rubber composition.

Table 2 shows the results of the low heat build-up index.

**Table 2**

| Table 2 | | | | | |
|---|---|---|---|---|---|
| | | Example 3 | Comparative Example 3 | Example 4 | Comparative Example 4 |
| [1] Formulation for production | | (parts by mass) | | | |
| Step (1) | | | | | |
| | Natural rubber | 100 | 100 | 100 | 100 |
| | Compound A represented by Formula (1)^{*1} | **0.5** | - | - | - |
| | Compound B represented by Formula (1)^{*2} | - | - | **0.5** | - |

| Step (2) | | | | | |
|---|---|---|---|---|---|
| | Carbon black^{*3} | 50 | 50 | 50 | 50 |
| | Antioxidant^{*4} | 1 | 1 | 1 | 1 |
| | Wax^{*5} | 1 | 1 | 1 | 1 |
| | Stearic acid | 2 | 2 | 2 | 2 |

| Step (3) | | | | | |
|---|---|---|---|---|---|
| | Zinc oxide | 2.5 | 2.5 | 2.5 | 2.5 |
| | Vulcanization accelerator^{*6} | 1.4 | 1.4 | 1.4 | 1.4 |
| | Sulfur | 1.1 | 1.1 | 1.1 | 1.1 |

| [2] Results of evaluation test | | (vulcanized rubber composition) | | | |
|---|---|---|---|---|---|
| | Low heat build-up index | **88** | 100 | **66** | 100 |

| | | | | | |
|---|---|---|---|---|---|
| *1: compound A of Production Example 1 (crosslinking agent) | | | | | |

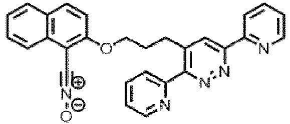

*2: compound B of Production Example 2 (crosslinking agent) 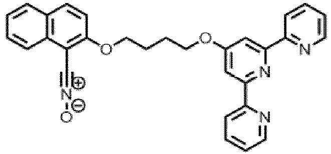 *3: carbon black, N234 grade *4: antioxidant, N-phenyl-N'-(1,3-dimethylbutyl)-p-phenylenediamine *5: wax, Antilux 111, produced by Rhein Chemie Rheinau *6: vulcanization accelerator, N-cyclohexyl-2-benzothiazolylsulfenamide (CBS)

### [3] Explanation of Low Heat Build-up

The vulcanized rubber compositions of Examples 1 to 4, each of which contains the compound represented by Formula (1), had lower heat build-up than the vulcanized rubber compositions of Comparative Examples 1 to 4 (conventional techniques).

The rubber composition of the present invention can be evaluated as exhibiting a lower heat build-up index of the vulcanized rubber composition, indicating reduced heat build-up of the vulcanized rubber composition.

### Industrial Applicability

Because the rubber composition of the present invention is formed by combining a rubber component with a compound (crosslinking agent) having a specific functional group with a nitrile oxide group, a specific spacer segment, and a triazyl, pyridyl, pyridazyl, pyrazyl, or pyrimidyl group, all of which optionally have a substituent at a substitutable position, the rubber composition exhibits excellent low heat build-up in vulcanized rubber. A tire produced using this rubber composition exhibits improved fuel efficiency.

## Claims

1. A rubber composition comprising
a rubber component, and
a compound represented by Formula (1) and/or a salt thereof:
X-A-Y (1)
wherein
X represents a functional group having a nitrile oxide group,
A represents a spacer segment, and
Y represents triazyl, pyridyl, pyridazyl, pyrazyl, or pyrimidyl, all of which optionally have a substituent at a substitutable position.

2. The rubber composition according to claim 1, wherein
in Formula (1), Y represents at least one functional group selected from the group consisting of the following Formulas (4a), (4b), (4c), and (4d): 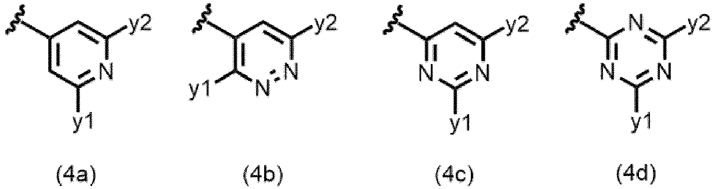 , and
in Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (O), and sulfur (S).

3. The rubber composition according to claim 1, wherein
in Formula (1), X represents at least one functional group having a nitrile oxide group selected from the group consisting of the following Formulas (2a) and (2b): 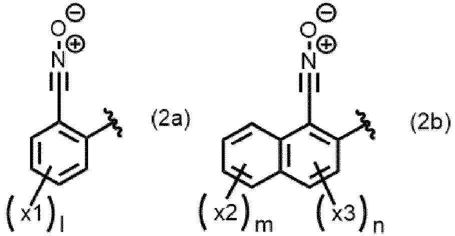
in Formula (2a), x1 represents a hydrogen atom, an alkyl group, an alkoxy group, an aryl group, or a halogen atom, and l represents an integer of 1 to 4,
in Formula (2a), when l is 2 or more, x1 may be the same or different,
in Formula (2b), x2 represents a hydrogen atom, an alkyl group, an alkoxy group, an aryl group, or a halogen atom, and m represents an integer of 1 to 4,
in Formula (2b), when m is 2 or more, x2 may be the same or different,
in Formula (2b), x3 represents a hydrogen atom, an alkyl group, an alkoxy group, an aryl group, or a halogen atom, and n represents an integer of 1 to 2,
in Formula (2b), when n is 2, x3 may be the same or different,
A represents a spacer segment represented by the following Formula (3): 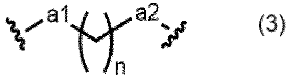
in Formula (3), a1 and a2 are the same or different and each represent at least one element selected from the group consisting of CH₂, NH, oxygen (O), and sulfur (S), and
in Formula (3), n represents an integer of 0 to 10.

4. The rubber composition according to claim 1, wherein
the compound represented by Formula (1) and/or a salt thereof is at least one compound selected from the group consisting of the following compounds: 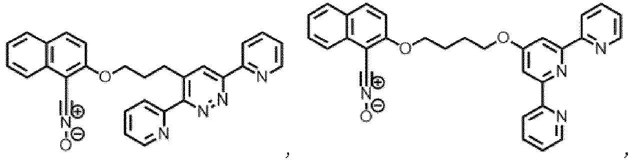 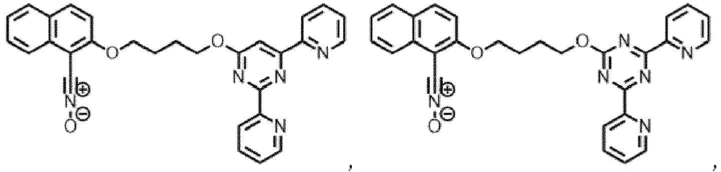 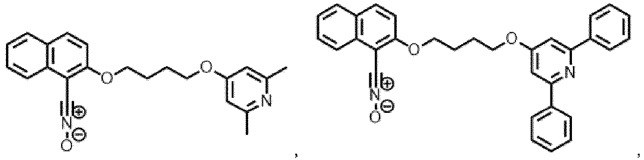 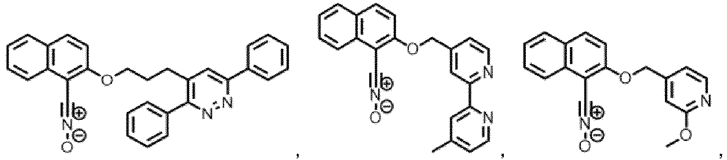 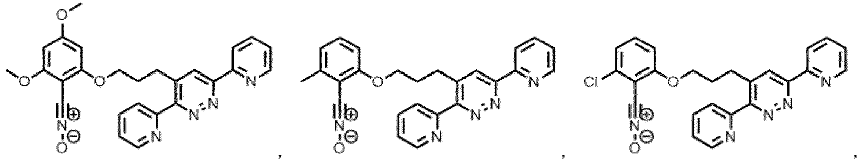 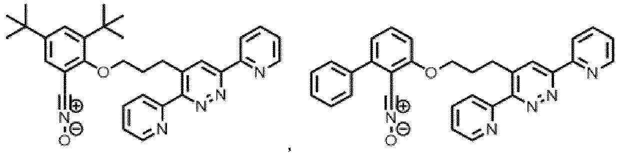
and/or at least one salt thereof.

5. The rubber composition according to claim 1, wherein the rubber component is a polymer containing a conjugated diene unit and/or an olefin unit.

6. The rubber composition according to claim 1, wherein the rubber component is at least one rubber component selected from the group consisting of natural rubber, isoprene rubber, styrene-butadiene copolymer rubber, butadiene rubber, and ethylene-propylene-diene rubber (EPDM).

7. The rubber composition according to claim 1, further comprising carbon black and/or an inorganic filler.

8. The rubber composition according to claim 1, comprising 30 to 150 parts by mass of the carbon black and/or the inorganic filler, per 100 parts by mass of the rubber component.

9. The rubber composition according to claim 1, comprising 0.01 to 30 parts by mass of the compound represented by Formula (1) and/or a salt thereof, per 100 parts by mass of the rubber component.

10. A tire produced using the rubber composition of any one of claims 1 to 9.

11. A heat-buildup-reducing agent for rubber, comprising a compound represented by the following Formula (1) and/or a salt thereof:
X-A-Y (1)
wherein
X represents a functional group having a nitrile oxide group,
A represents a spacer segment, and
Y represents triazyl, pyridyl, pyridazyl, pyrazyl, or pyrimidyl, all of which optionally have a substituent at a substitutable position.

12. The heat-buildup-reducing agent for rubber according to claim 11,
wherein
in Formula (1), Y represents at least one functional group selected from the group consisting of the following Formulas (4a), (4b), (4c), and (4d): 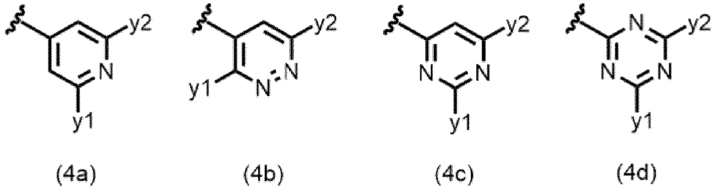 and
in Formulas (4a), (4b), (4c), and (4d), y1 and y2 are the same or different and each represent a hydrogen atom, an aryl group, an alkyl group, an alkoxy group, an alkylthio group, or a heterocyclic group containing at least one element selected from the group consisting of nitrogen (N), oxygen (0), and sulfur (S).

13. The heat-buildup-reducing agent for rubber according to claim 11,
wherein
in Formula (1), X represents at least one functional group having a nitrile oxide group selected from the group consisting of the following Formulas (2a) and (2b): 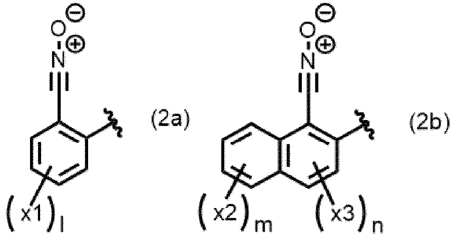
in Formula (2a), x1 represents a hydrogen atom, an alkyl group, an alkoxy group, an aryl group, or a halogen atom, and l represents an integer of 1 to 4,
in Formula (2a), when l is 2 or more, x1 may be the same or different,
in Formula (2b), x2 represents a hydrogen atom, an alkyl group, an alkoxy group, an aryl group, or a halogen atom, and m represents an integer of 1 to 4,
in Formula (2b), when m is 2 or more, x2 may be the same or different,
in Formula (2b), x3 represents a hydrogen atom, an alkyl group, an alkoxy group, an aryl group, or a halogen atom, and n represents an integer of 1 to 2,
in Formula (2b), when n is 2, x3 may be the same or different,
A represents a spacer segment represented by the following Formula (3): 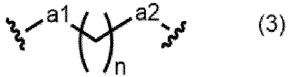
in Formula (3), a1 and a2 are the same or different and each represent at least one element selected from the group consisting of CH₂, NH, oxygen (O), and sulfur (S), and
in Formula (3), n represents an integer of 0 to 10.

14. The heat-buildup-reducing agent for rubber according to claim 11,
wherein
the compound represented by Formula (1) and/or a salt thereof is at least one compound selected from the group consisting of the following compounds: 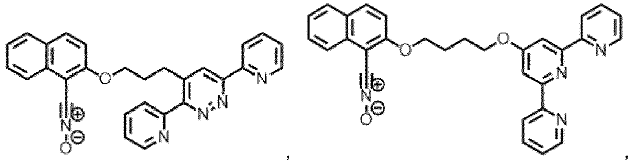 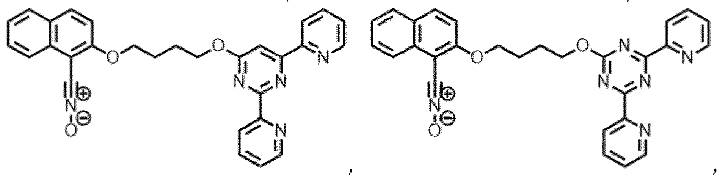 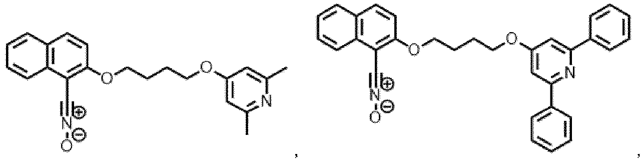 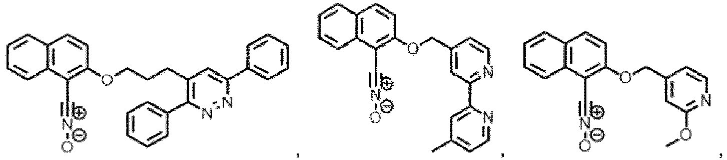 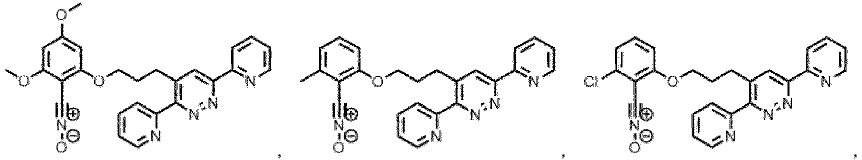 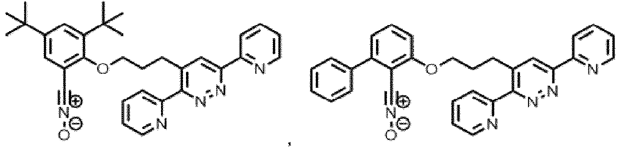
and/or at least one salt thereof.
